# FASCICULE DE BREVET EUROPEEN

(11) **EP 4 304 431 B1**
(45) Date de publication et mention de la délivrance du brevet: **05.03.2025**
(21) Numéro de dépôt: 22711981.5
(22) Date de dépôt: 10.03.2022
(51) Int. Cl.: A47J 43/07

(54) **BASE MOTORISÉE POUR UN APPAREIL DE PRÉPARATION CULINAIRE AVEC VENTILATION SILENCIEUSE**
MOTORISIERTE BASIS FÜR EIN GERÄT ZUR ZUBEREITUNG VON LEBENSMITTELN MIT GERÄUSCHARMER ENTLÜFTUNG
MOTORIZED BASE FOR A FOOD PREPARATION APPLIANCE WITH SILENT VENTING

(30) Priorité: 12.03.2021 FR 2102494
(43) Date de publication de la demande: 17.01.2024
(73) Titulaire: SEB S.A., 69130 Ecully (FR)
(72) Inventeur: MONTHERAT, Emile-Philippe, 53960 BONCHAMP-LÈS-LAVAL (FR); GRUAU, Frédéric, 53000 LAVAL (FR); LEMERCIER, Michel, 53250 JAVRON-LES-CHAPELLES (FR)
(74) Mandataire: SEB Développement
(86) Numéro de dépôt international: PCT/EP2022/056157
(87) Numéro de publication internationale: WO 2022/189556

(56) Documents cités:
- EP-A1- 2 679 124
- CN-A- 108 309 093
- CN-A- 108 742 190
- CN-A- 109 381 074
- US-A1- 2017 296 992
- US-A1- 2019 320 849
- US-A1- 2019 328 178

## Description

### Domaine technique

L'invention concerne le domaine des bases motorisées pour appareil de préparation culinaire, notamment pour un usage domestique.

De telles bases motorisées comportent un boitier externe ayant, sur un côté supérieur, un coupleur configuré pour permettre un accouplement et un désaccouplement d'un outil de travail et pour assurer l'entraînement en rotation de l'outil de travail. Le boîtier externe comporte, sur un côté inférieur, un piètement d'appui par lequel la base motorisée est destinée à reposer sur une surface d'accueil, par exemple un plan de travail. Dans ce boîtier externe de la base motorisée, on trouve un moteur électrique ayant un arbre moteur rotatif autour d'un axe moteur, le moteur ayant une première sortie axiale qui est reliée au coupleur pour en assurer l'entraînement en rotation.

De telles bases motorisées sont généralement utilisées en tant que base pour un appareil de préparation culinaire qui comporte un bol, ce bol pouvant être accroché de manière amovible sur le côté supérieur de la base motorisée, par exemple par un mécanisme à baïonnette. L'outil de travail est destiné à être reçu dans le bol pour interagir avec des aliments introduits dans le bol. Pour cela, le bol comporte généralement une ouverture inférieure pour permettre l'accouplement entre l'outil de travail et le coupleur de la base motorisée.

Il existe différentes catégories d'appareils de préparation culinaire qui présentent cette conception, avec cependant des agencements qui peuvent présenter des différences entre eux.

On connait par exemple les appareils couramment dénommés « robots socle » dont un premier type est illustré sous la forme d'un premier exemple dans le document EP2074919, mais aussi sous la forme d'un deuxième exemple à la [Fig.1] de la présente demande. Ici la base motorisée est généralement de forme parallélépipédique ou cylindrique, avec une face supérieure qui est la face la plus haute de la base motorisée, sur laquelle on trouve d'une part un coupleur pour l'outil de travail et d'autre part des moyens d'accrochage d'un bol de travail. Dans ce cas, le moteur électrique qui entraîne le coupleur est agencé en dessous de la face supérieure sur laquelle on trouve le coupleur configuré pour permettre l'accouplement et le désaccouplement d'un outil de travail.

Un deuxième type d'appareil est décrit sous la forme d'un premier exemple dans le document FR2934143 et sous la forme d'un deuxième exemple à la [Fig.2] de la présente demande. Dans ce deuxième type, l'appareil présente une base motorisée dont la forme générale est celle d'un L, avec une portion inférieure d'extension générale horizontale et une portion latérale d'extension générale verticale par rapport à une face inférieure comprenant le piètement d'appui par lequel la base motorisée est destinée à reposer sur une surface d'accueil. Dans un appareil de ce deuxième type, la portion inférieure de la base motorisée comporte une face supérieure sur laquelle on trouve le coupleur pour l'outil de travail, et sur laquelle le bol est destiné à venir être accroché. La face inférieure de cette portion inférieure comporte le piètement d'appui par lequel la base motorisée est destinée à reposer sur une surface d'accueil. Latéralement par rapport à cette portion inférieure, on trouve la portion latérale qui s'étend verticalement plus haut que la face supérieure, pour s'étendre latéralement à côté du bol lorsque celui-ci est installé sur la portion inférieure. Dans un tel mode de réalisation en L, le moteur électrique peut être agencé à l'intérieur de la portion latérale, et peut donc s'étendre verticalement plus haut que la face supérieure de la portion inférieure. Dans un tel cas, le moteur électrique peut être installé verticalement, avec une extrémité inférieure qui est reliée, par exemple au moyen d'une courroie s'étendant dans la portion inférieure, au coupleur destiné à assurer l'entraînement de l'outil de travail.

Dans le cadre des bases motorisées pour de tels appareils, l'invention concerne plus particulièrement l'optimisation du refroidissement du moteur électrique d'entraînement de l'outil travail. En effet, il est connu de prévoir dans de telles bases motorisées un ventilateur qui est directement agencé à une extrémité du moteur, par exemple en étant monté directement sur une extrémité de sortie de l'arbre du moteur électrique. Généralement, le ventilateur est configuré pour aspirer un flux d'air le long du moteur électrique, et pour rejeter ce flux d'air vers l'extérieur du boîtier externe, au travers d'une sortie d'air aménagée dans ce boîtier externe.

Il existe de nombreuses propositions quant à l'agencement du dispositif de ventilation permettant d'assurer la circulation de l'air entre le ventilateur et la sortie d'air.

### Technique antérieure

Le document CN 208 510 851 décrit un dispositif dans lequel le ventilateur est accueilli dans un collecteur qui communique avec une chambre de sortie par un conduit en arc de cercle autour du collecteur. Le collecteur, le conduit en arc de cercle et la chambre de sortie sont sensiblement dans le même plan. La chambre de sortie comporte une paroi inférieure qui coïncide avec la face inférieure de la base motorisée et qui comporte des ouïes par lesquelles l'air refoulé peut sortir vers l'extérieur, vers le bas en direction de la surface d'accueil sur laquelle repose la base motorisée. Le document CN108078437A décrit lui aussi une chambre en spirale.

Le document CN 208 339 432 décrit un dispositif dans lequel l'air refoulé par le ventilateur est engagé dans une chambre en spirale autour de l'axe moteur qui est perpendiculaire à la face inférieure de la base motorisée. Cette chambre présente par ailleurs, dans sa paroi inférieure qui coïncide avec la face inférieure de la base motorisée, des ouïes par lesquelles l'air refoulé peut sortir vers l'extérieur, vers le bas en direction de la surface d'accueil sur laquelle repose la base motorisée.

Le document CN108324134A décrit un dispositif dans lequel l'air qui est mis en circulation par le ventilateur à l'intérieur de la base motorisée est aspiré au travers d'un orifice d'entrée puis conduit dans une cheminée tubulaire d'aspiration le long du moteur jusqu'à une extrémité supérieure de celui-ci, avant de redescendre le long du moteur dans une chambre cylindrique délimitée au centre de la cheminée tubulaire. La chambre cylindrique et la cheminée tubulaire sont situées en amont du ventilateur. Le document CN108742190A décrit un autre dispositif dans lequel l'air est mis en circulation par un ventilateur.

On comprend que la bonne ventilation du moteur est une caractéristique importante pour en assurer la fiabilité. Par ailleurs, on comprend aussi que le circuit de ventilation peut être une source importante d'émission de bruit en direction de l'extérieur de la base motorisée. Ce bruit peut comprendre le bruit généré en lui-même par le moteur électrique et par les composants mécaniques en mouvement qui se trouvent à l'intérieur du boîtier externe de la base motorisée. Ce bruit peut aussi comprendre des bruits aérauliques du flux d'air entrant et sortant. On comprend que la technique antérieure a déjà cherché des solutions permettant de trouver un compromis optimal entre l'exigence d'une efficacité de ventilation, nécessitant un débit d'air le plus important possible, l'exigence d'une émission de bruit la plus réduite possible, et la capacité du circuit de ventilation à être intégré dans un boîtier externe qui reste compact.

### Exposé de l'invention

Dans ce but, l'invention propose une base motorisée pour un appareil de préparation culinaire, du type comportant :
- un boitier externe ayant, sur un côté supérieur, un coupleur configuré pour permettre un accouplement et un désaccouplement d'un outil de travail et pour assurer l'entraînement en rotation de l'outil de travail, le boîtier externe comportant, sur un côté inférieur, un piètement d'appui par lequel la base motorisée est destinée à reposer sur une surface d'accueil,
- dans le boîtier externe, un moteur électrique ayant un arbre moteur rotatif autour d'un axe moteur, le moteur électrique ayant une première extrémité axiale et une deuxième extrémité axiale, opposée à la première extrémité axiale, qui entraîne en rotation un ventilateur qui est agencé du côté de la deuxième extrémité axiale du moteur et qui aspire un flux d'air qui circule le long du moteur électrique depuis la première extrémité axiale vers la deuxième extrémité axiale, le ventilateur rejetant un flux d'air sortant qui est canalisé selon un circuit aval vers un orifice de sortie aménagé dans une face du boitier externe, au niveau duquel le flux d'air sortant est éjecté en dehors du boîtier externe, le circuit aval comprenant, successivement dans le sens de circulation du flux d'air sortant, un collecteur, un conduit de transfert, et l'orifice de sortie.

La base motorisée est caractérisée en ce que le circuit aval comporte, entre le conduit de transfert et l'orifice de sortie, une double cheminée ayant un canal extérieur tubulaire amont, qui s'étend selon une direction de cheminée depuis une extrémité amont reliée au conduit de transfert, et qui est raccordé fluidiquement, par l'intermédiaire d'un volume de retournement, à un canal intérieur aval qui s'étend à l'intérieur du volume du canal extérieur tubulaire amont selon la direction de cheminée jusqu'à une extrémité aval qui correspond à l'orifice de sortie.

L'invention peut aussi comprendre, dans certains modes de réalisation, une ou plusieurs des caractéristiques optionnelles suivantes.

Le flux d'air sortant peut parcourir la double cheminée d'abord dans le canal extérieur tubulaire amont, selon un premier sens de la direction de cheminée, puis dans le canal intérieur aval, selon un second sens opposé au premier sens de la direction de cheminée.

La double cheminée peut comporter une cloison externe tubulaire qui s'étend selon la direction de cheminée et une cloison interne tubulaire qui s'étend selon la direction de cheminée à l'intérieur du volume délimité par la cloison externe tubulaire de sorte que les deux cloisons délimitent entre elles le canal extérieur tubulaire amont tandis que la cloison interne tubulaire délimite le canal intérieur aval.

Le conduit de transfert peut s'étendre selon une direction perpendiculaire à l'axe moteur.

Le conduit de transfert peut présenter une section transversale croissante en allant du collecteur vers l'extrémité amont du canal extérieur tubulaire amont.

Le ventilateur peut être un ventilateur centrifuge qui rejette le flux d'air sortant du ventilateur selon une direction orthogonale à l'axe moteur. Le conduit de transfert peut alors être orienté orthogonalement par rapport à l'axe moteur.

Le ventilateur peut être un ventilateur axial qui rejette le flux d'air sortant du ventilateur selon la direction axiale de l'axe moteur.

Le conduit de transfert peut être orienté orthogonalement par rapport à l'axe moteur. Le collecteur peut dévier le flux d'air sortant du ventilateur selon la direction axiale de l'axe moteur vers le conduit de transfert.

Le collecteur peut comporter une paroi perpendiculaire à l'axe moteur, agencée à proximité du ventilateur, du côté opposé au moteur électrique par rapport au ventilateur. Le conduit de transfert peut alors présenter une paroi latérale qui prolonge la paroi arrière du collecteur.

La direction de cheminée peut s'étendre selon une direction perpendiculaire à une direction principale du conduit de transfert.

Le conduit de transfert peut guider le flux d'air sortant de telle sorte qu'il est injecté dans le canal extérieur tubulaire amont de la double cheminée selon une direction tangentielle par rapport à la direction de cheminée.

La direction de cheminée peut être parallèle à l'axe moteur, et être décalée transversalement par rapport à l'axe moteur.

La double cheminée peut s'étendre parallèlement à côté du moteur électrique dans le boitier externe.

La direction de cheminée peut s'étendre perpendiculairement à l'axe moteur.

Le volume de retournement peut être délimité par une paroi d'extrémité de la double cheminée qui est raccordée sur toute une circonférence d'une extrémité aval de la cloison externe tubulaire de la double cheminée. Un bord libre amont de la cloison interne tubulaire peut alors être agencé à distance de la paroi d'extrémité de la double cheminée pour former le volume de retournement.

La double cheminée peut présenter une face interne concave et présenter une forme de section de tore ayant un axe parallèle à la direction de cheminé, la section de tore étant coupée par un plan perpendiculaire à l'axe du tore.

Le canal intérieur aval peut présenter une section transversale croissante en allant vers son extrémité aval selon la direction de cheminée.

Le canal intérieur aval peut présenter une forme de révolution autour d'un axe qui forme la direction de cheminée.

L'extrémité aval du canal intérieur aval qui correspond à l'orifice de sortie peut présenter une géométrie évasée en pavillon d'instrument de musique.

Le canal extérieur tubulaire amont peut présenter une section transversale croissante en allant depuis son extrémité amont vers le volume de retournement selon la direction de cheminée.

Le canal extérieur tubulaire amont peut présenter une forme de révolution autour d'un axe parallèle à la direction de cheminée.

Le canal extérieur tubulaire amont et le canal intérieur aval peuvent être coaxiaux.

La section transversale du canal intérieur aval peut être toujours supérieure à la section transversale du canal extérieur tubulaire amont. Ainsi l'écoulement de l'air se fait au travers d'une section continument croissante.

Le circuit aval peut présenter une section transversale croissante dans le sens de circulation du flux d'air sortant depuis l'entrée du conduit de transfert jusqu'à l'orifice de sortie.

La direction de cheminée peut être verticale et l'orifice de sortie peut alors être aménagé dans une face inférieure du boîtier externe.

La direction de cheminée peut être inclinée par rapport à la verticale et l'orifice de sortie peut alors être aménagé dans une face latérale du boîtier externe.

La première extrémité axiale du moteur électrique peut être reliée au coupleur pour en assurer l'entraînement en rotation.

L'invention propose également un appareil de préparation culinaire comportant une base motorisée et un accessoire de travail agencé sur la base motorisée, l'accessoire de travail comprenant un récipient de travail et un outil de travail agencé dans le récipient de travail et entrainé en rotation par la base motorisée, dans lequel la base motorisée est conforme à l'une au moins des caractéristiques précitées.

### Brève description des dessins

[Fig.1] La [Fig.1] est une vue schématique de face d'un premier type d'appareil de préparation culinaire dans lequel on peut mettre en œuvre l'invention.
[Fig.2] La [Fig.2] est une vue schématique en perspective d'un deuxième type d'appareil de préparation culinaire dans lequel on peut mettre en œuvre l'invention.
[Fig.3] La [Fig.3] représente une vue en perspective avec arrachement partiel, selon la ligne brisée III-III de la [Fig.4], d'une base motorisée selon un premier mode de réalisation de l'invention.
[Fig.4] La [Fig.4] est une vue schématique en coupe de la base motorisée selon la [Fig.3], selon la ligne brisée IV-IV de la [Fig.5].
[Fig.5] La [Fig.5] est une vue schématique en coupe de la base motorisée selon la [Fig.3], selon la ligne brisée III-III de la [Fig.4].
[Fig.6A-6C] Les figures 6A-6C illustrent schématiquement un deuxième mode de réalisation d'une base motorisée selon l'invention, respectivement selon une première vue schématique en coupe verticale 6A, selon une vue schématique 6B en coupe par le plan VIB-VIB de la vue 6A, et selon une vue schématique en coupe 6C par le plan VIC-VIC de la vue 6A.
[Fig.7A-7C] Les figures 7A-7C illustrent schématiquement un troisième mode de réalisation d'une base motorisée selon l'invention, selon une vue schématique 7B en coupe par le plan VIIB-VIIB de la vue 7A, et selon une vue schématique en coupe 7C par le plan VIIC-VIIC de la vue 7A.
[Fig.8A-8C] Les figures 8A-8C illustrent schématiquement un quatrième mode de réalisation d'une base motorisée selon l'invention, respectivement selon une première vue schématique en coupe 8A, selon une vue schématique 8B en coupe par le plan VIIIB-VIIIB de la vue 8A, et selon une vue schématique en coupe 8C par le plan VIIIC-VIIIC de la vue 8A.
[Fig.9] La [Fig.9] illustre schématiquement en coupe un cinquième mode de réalisation d'une base motorisée selon l'invention.
[Fig.10] La [Fig.10] illustre schématiquement en coupe une variante de réalisation de la double cheminée, susceptible d'être mise en œuvre dans tous les modes de réalisation précédents.

### Description des modes de réalisation

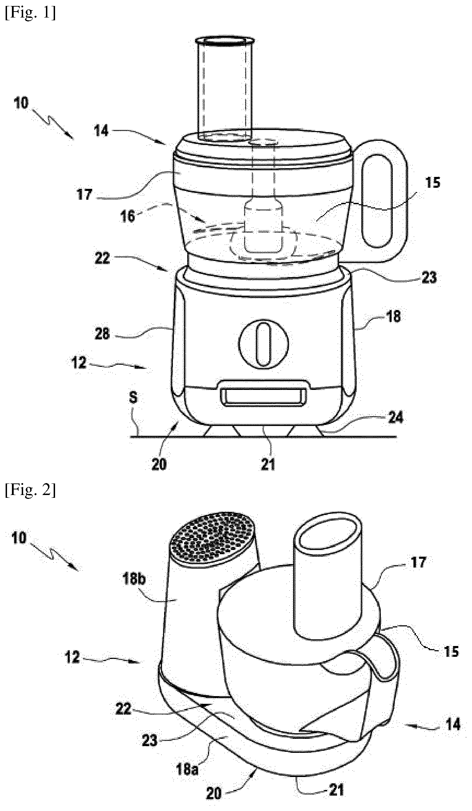

Sur les Figs. 1 et 2, on a représenté deux exemples d'un appareil 10 de préparation culinaire à usage domestique dans lequel l'invention peut être mise en œuvre, correspondant à deux types d'appareil différents.

Dans les deux cas, un tel appareil 10 comporte pour l'essentiel une base motorisée 12 ainsi qu'un accessoire de travail 14 comprenant un récipient de travail 15, parfois appelé bol, et un outil de travail 16 qui est destiné à être reçu à l'intérieur du récipient de travail 15 et qui est destiné à être entraîné en rotation à l'intérieur de celui-ci, par accouplement avec la base motorisée 12, ceci afin d'interagir avec des aliments introduits dans le récipient de travail 15. Suivant la nature, la géométrie et la vitesse de rotation de l'outil de travail 16, le récipient de travail 15 peut être fermé par un couvercle 17. Suivant la nature et la géométrie du récipient de travail 15, et suivant la nature, la géométrie et la vitesse de rotation de l'outil de travail 16, un tel appareil 10 est parfois dénommé « robot multifonctions » ou « blender ». De manière connue, le récipient de travail 15 est accroché de manière amovible sur la base motorisée 12.

La base motorisée 12 comporte un boîtier externe 18 qui peut présenter une géométrie quelconque. Dans le premier type d'appareil illustré à la [Fig.1], on peut voir que la géométrie du boîtier externe 18 est sensiblement celle d'un parallélépipède ou d'un tronc de pyramide. Dans le deuxième type dont un exemple est illustré à la [Fig.2], la géométrie du boîtier externe 18 est sensiblement celle d'un L, avec une portion inférieure 18a d'extension générale horizontale et une portion latérale 18b d'extension générale verticale par rapport à une face inférieure 21 comprenant le piètement d'appui 24 par lequel la base motorisée 12 est destinée à reposer sur une surface d'accueil S, telle qu'un plan de travail, ne faisant pas partie de l'appareil 10.

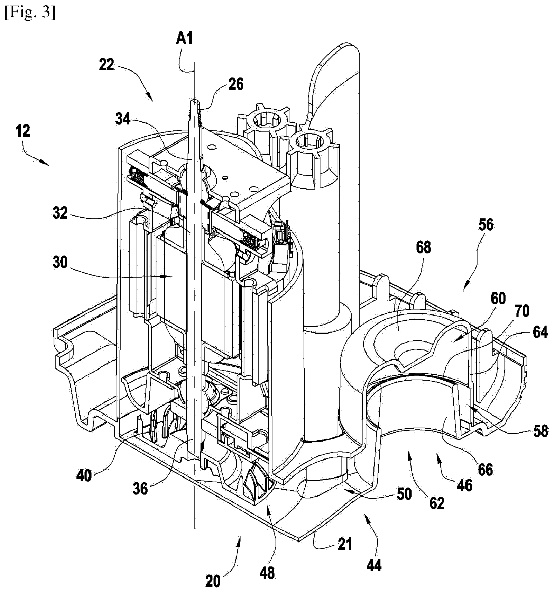

Dans tous les cas, on peut distinguer, par exemple sur la [Fig.3], un côté inférieur 20 et un côté supérieur 22. Le côté inférieur 20 est celui qui présente un piètement d'appui 24 par lequel la base motorisée 12 est destinée à reposer sur la surface d'accueil. Le côté supérieur 22 du boîtier externe 18 est celui sur lequel on peut trouver un coupleur 26 configuré pour permettre un accouplement et un désaccouplement de l'outil de travail 16 et pour assurer l'entraînement en rotation de l'outil de travail 16. Les notions de « supérieur » et « inférieur » se réfèrent à la direction verticale de la gravité terrestre, et se réfèrent à l'orientation de l'appareil 10 lors d'une utilisation normale. Le coupleur 26 peut être tout mécanisme connu dans le domaine, et peut par exemple comprendre un arbre cannelé.

Dans le premier type d'appareil illustré à la [Fig.1], dans lequel le boîtier externe 18 présente une géométrie en un seul volume, par exemple en forme de parallélépipède, de cylindre ou de tronc de pyramide, le boîtier externe 18 présente ainsi une face inférieure 21, qui forme le côté inférieur, et une face supérieure 23 qui forme le côté supérieur 22. Dans une configuration d'utilisation de l'appareil 10, la face inférieure 21 et la face supérieure 23 sont orientées horizontalement. La face supérieure 23 comporte également un mécanisme d'accrochage amovible du récipient de travail 15 sur la base motorisée 12, par exemple un mécanisme à baïonnette. Le boîtier externe 18 comporte une ou plusieurs face(s) latérale(s) 28 qui relient la face inférieure 21 à la face supérieure 23 et qui sont d'extension principalement verticale en configuration d'utilisation de l'appareil. Le boîtier externe 18 est généralement réalisé en plusieurs pièces, avec par exemple une demi-coque inférieure et une demi-coque supérieure.

Dans un appareil 10 du deuxième type tel qu'illustré à la [Fig.2], la portion inférieure 18a de la base motorisée 12 comporte une face supérieure 23 sur laquelle on trouve le coupleur 26 pour l'outil de travail 16, et sur laquelle le récipient de travail 15 est destiné à venir être accroché. La face inférieure 21 de cette portion inférieure 18a comporte le piètement d'appui 24 par lequel la base motorisée 12 est destinée à reposer sur une surface d'accueil. Latéralement par rapport à cette portion inférieure 18a, on trouve la portion latérale 18b qui s'étend verticalement plus haut que face supérieure 23, pour s'étendre latéralement à côté du récipient de travail 15 lorsque celui-ci est installé sur la portion inférieure 18a.

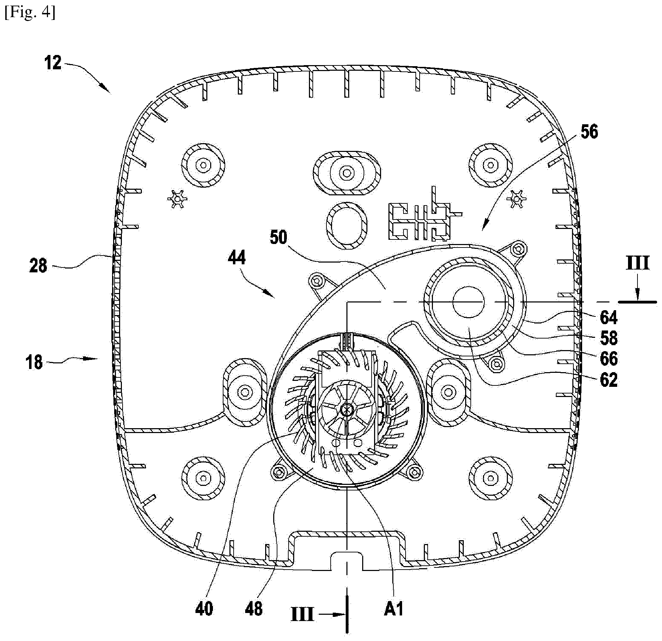

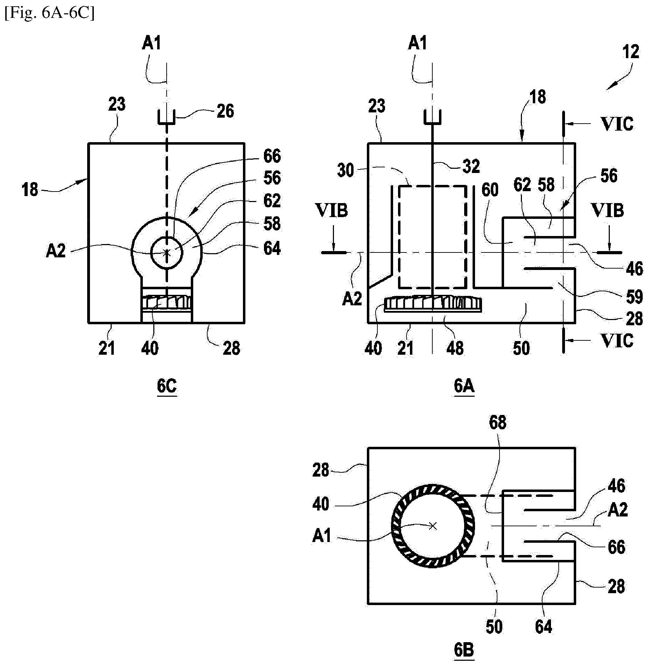

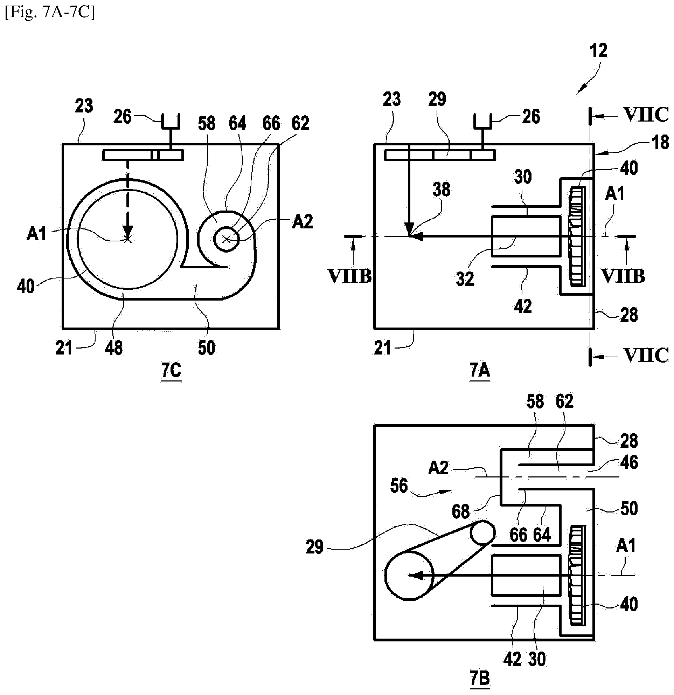

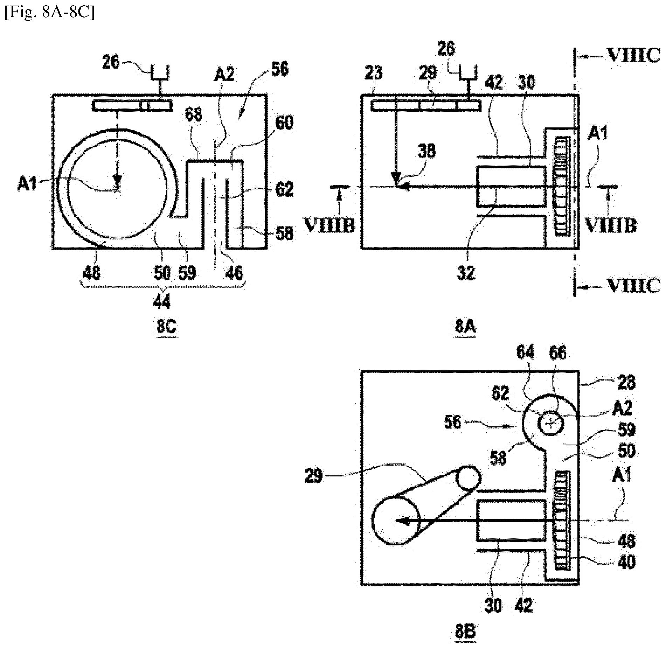

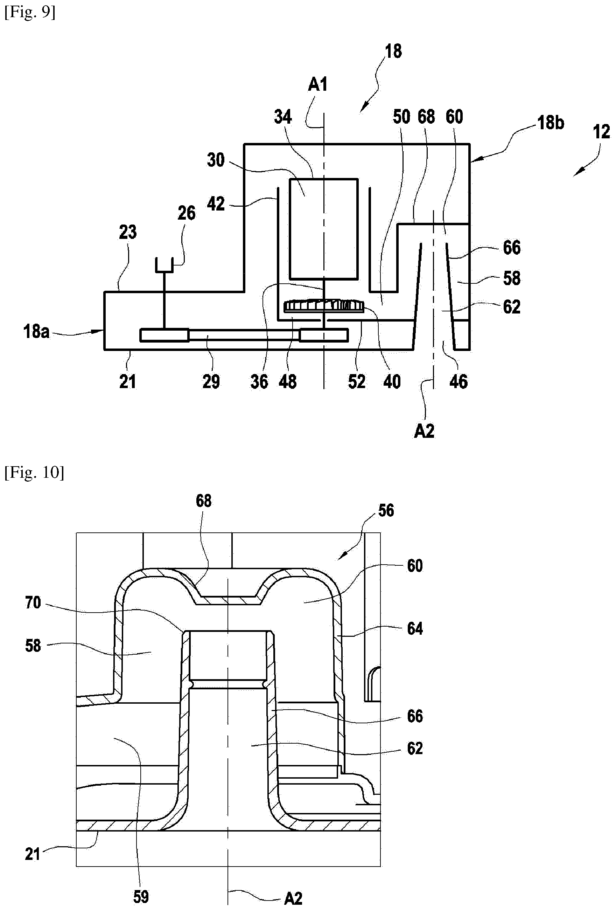

Le premier mode de réalisation illustré sur les Figs. 3 à 5, de même que les deuxième, troisième et quatrième modes de réalisation illustrés respectivement à la Fig. 6A-6C, à la Fig. 7A-7C, et à la Fig. 8A-C, sont des exemples de bases motorisées correspondant au premier type d'appareil. Le cinquième mode de réalisation illustré à la [Fig.9] est un exemple de base motorisée correspondant au deuxième type d'appareil.

Dans tous les cas, le boitier externe 18 de la base motorisée 12 délimite donc un espace interne dans lequel est reçu notamment une mécanique d'entraînement du coupleur 26. Ainsi, la base motorisée 12 comporte, dans le boîtier externe 18, un moteur électrique 30 ayant un arbre moteur 32 rotatif autour d'un axe moteur A1. Le moteur électrique 30 présente ainsi une première extrémité axiale 34, et une deuxième extrémité axiale 36, opposée à la première extrémité axiale par rapport au moteur électrique 30 selon la direction de l'arbre moteur 30. Dans les exemples, la première extrémité axiale 34 et la deuxième extrémité axiale 36 sont des extrémités axiales de l'arbre moteur 32 de part et d'autre du moteur électrique 30 selon la direction de l'axe moteur A1.

Dans un appareil du deuxième type, en L, le moteur électrique 30 peut être agencé à l'intérieur de la portion latérale 18b du boîtier externe 18, et peut donc par exemple s'étendre verticalement plus haut que la face supérieure 23 de la portion inférieure 18a. Dans un tel cas, le moteur électrique peut être installé verticalement, avec une extrémité inférieure qui est reliée, par exemple au moyen d'une courroie qui s'étend dans la portion inférieure, au coupleur 26 destiné à assurer l'entraînement de l'outil de travail 14, comme cela est visible sur la [Fig.9].

Le moteur électrique 30 entraîne en rotation d'une part le coupleur 26 et d'autre part un ventilateur 40 qui est agencé du côté d'une extrémité axiale du moteur électrique 30, que l'on nommera ici arbitrairement deuxième extrémité axiale 36 du moteur. Le ventilateur 40, lorsqu'il tourne autour de son axe, aspire un flux d'air qui circule le long du moteur électrique 30 depuis la première extrémité axiale 34 vers la deuxième extrémité axiale 36. Dans les exemples illustrés, on voit que le ventilateur 40 est coaxial avec le moteur électrique 30, donc en ayant comme axe de rotation l'axe moteur A1. Il peut ainsi être monté directement sur la deuxième extrémité axiale 36 de l'arbre moteur 32 et ainsi être entrainé à la vitesse de rotation de l'arbre moteur 32. Cependant, on pourrait prévoir que le ventilateur 40 soit entraîné en rotation par la deuxième extrémité axiale 36 de l'arbre moteur par l'intermédiaire d'un réducteur de vitesse ou d'un multiplicateur de vitesse, par exemple sous la forme d'un mécanisme à engrenages.

Dans le premier exemple illustré sur les Figs. 3 à 5, le moteur électrique 30 est implanté verticalement, l'axe moteur A1 étant donc vertical, perpendiculaire à la face inférieure 21 qui présente le piètement d'appui 24. Il en est de même dans le deuxième exemple de la Fig. 6A-6C, et dans le cinquième exemple de la [Fig.9]. Cependant, comme illustré dans le troisième exemple de la Fig. 7A-7C ou le quatrième exemple de la Fig. 8A-8C, l'invention peut aussi être mise en œuvre dans des bases motorisées dans lesquelles le moteur électrique 30 est implanté horizontalement, voire même implanté selon une direction oblique. Dans ce cas, un mécanisme de renvoi d'angle 38, par exemple par pinions coniques, est prévu entre le moteur électrique 30 et le coupleur 26.

Dans certains modes de réalisation, le coupleur 26 est entraîné en rotation par la première extrémité axiale 34 du moteur électrique 30, donc par l'extrémité axiale qui est opposée à celle où est agencé le ventilateur 40. Cependant, comme on le verra pour le cinquième mode de réalisation de la [Fig.9], le coupleur 26 peut être entraîné en rotation par la deuxième extrémité axiale 36 du moteur électrique 30, donc par la même extrémité axiale que celle où est agencé le ventilateur 40. La liaison entre la première extrémité axiale 34 ou la deuxième extrémité axiale 36 du moteur électrique 30 et le coupleur 26 peut être directe, avec par exemple le coupleur 26 monté directement sur l'extrémité axiale de l'arbre moteur 32 du moteur électrique 30. Cependant, la liaison entre la première extrémité axiale 34 ou la deuxième extrémité axiale 36 du moteur électrique 30 et le coupleur 26 peut être indirecte. Ainsi, le coupleur 26 peut être entraîné en rotation par le moteur électrique 30 par l'intermédiaire d'une transmission mécanique qui peut comprendre une courroie de transmission 29, et/ou un train d'engrenages, et/ou un flexible de transmission.

Dans certains modes de réalisation, par exemple le premier et le deuxième mode de réalisation, le coupleur 26 est coaxial avec l'arbre moteur 32, et s'étend selon l'axe moteur A1 du moteur électrique 30. Cela est possible avec une liaison directe du coupleur 26 avec l'extrémité axiale 34, 36 du moteur électrique 30, mais aussi avec une liaison indirecte. Dans le cas d'une liaison indirecte, le coupleur 26 peut ne pas être coaxial avec l'arbre moteur 32, comme ce qui est illustré avec les troisième, quatrième et cinquième modes de réalisation qui font appel à une courroie de transmission 29.

Dans tous les modes de réalisation, le ventilateur 40 aspire un flux d'air qui circule le long du moteur électrique selon la direction de l'axe moteur A1, dans un sens de circulation qui va de la première extrémité axiale 34 à la deuxième extrémité axiale 36 du moteur électrique 30. Avantageusement, la base motorisée peut comporter une chemise 42, par exemple de forme cylindrique selon la direction de l'axe moteur A1, qui entoure au moins en partie le moteur électrique 30 autour de l'axe moteur A1, de préférence sur l'extension axiale allant de la première extrémité axiale 34 à la deuxième extrémité axiale 36 du moteur électrique 30, pour canaliser le flux d'air aspiré par le ventilateur 40 le long du moteur électrique 30. Une telle chemise 42 peut être reliée à une entrée d'air aménagée dans une face du boîtier externe 18, par exemple une face latérale 28 du boîtier externe 18.

Le ventilateur 40 rejette un flux d'air sortant qui, à l'intérieur du boîtier externe 18, est canalisé selon un circuit aval 44 vers un orifice de sortie 46 aménagé dans une face du boitier externe 18, au niveau duquel le flux d'air sortant est éjecté en dehors du boîtier externe 18. Dans le premier mode de réalisation des Figs. 3 à 5, et dans le cinquième mode de réalisation de la [Fig.9], l'orifice de sortie 46 est aménagé dans la face inférieure 21 du boîtier externe 18. Dans d'autres modes de réalisation, tels que les deuxième, troisième et quatrième modes de réalisation, l'orifice de sortie 46 est aménagé dans une face latérale 28 du boîtier externe 18.

Comme on peut le voir sur les différentes figures, le circuit aval 44 comprend, successivement dans le sens de circulation du flux d'air sortant, un collecteur 48, un conduit de transfert 50, et l'orifice de sortie 46.

Le circuit aval 44 est formé dans l'espace intérieur délimité par le boîtier externe 18. Le circuit aval 44 est formé de parois qui permettent de canaliser l'air. Ces parois peuvent être des parois de composants dédiés, ou comporter des parois d'autres composants de la base motorisée 12, notamment par exemple des éléments de paroi du boîtier externe 18, et/ou de parois de compartimentage internes du boîtier externe 18. On notera que le circuit aval 44 a pour but de canaliser le flux d'air sortant, refoulé par le ventilateur 40, vers l'orifice de sortie 46. Le circuit aval 44 peut être conçu pour être étanche par rapport au reste de l'espace intérieur délimité par le boitier externe 18. Cependant, on comprend que cela n'est pas une obligation. Il est attendu qu'une majorité du débit massique du flux d'air sortant généré par le ventilateur 40 soit canalisé par le circuit aval 44 jusqu'à l'orifice de sortie 46. Au moins certaines portions du circuit aval 44 pourront présenter des fuites, notamment vers le reste de l'espace intérieur délimité par le boitier externe 18. De même une partie du flux d'air sortant, refoulé par le ventilateur 40, peut être dévié, par exemple par un circuit auxiliaire, vers d'autres organes à ventiler de la base motorisée 12.

Ainsi, le collecteur 48 du circuit aval 44 peut avantageusement comprendre une ou plusieurs parois dont la forme et l'agencement permettent de collecter et diriger l'air refoulé par le ventilateur 40 vers le conduit de transfert 50. La forme et l'agencement du collecteur 48 dépendent notamment de la forme du ventilateur 40, du type de ventilateur 40, et de la position et de l'orientation relatives du conduit de transfert 50 par rapport au ventilateur 40.

Dans les exemples illustrés, le ventilateur 40 est un ventilateur centrifuge qui rejette le flux d'air sortant du ventilateur 40 selon une direction orthogonale à l'axe de rotation du ventilateur 40, ici l'axe moteur A1. Dans les exemples illustrés, le conduit de transfert 50 est orienté orthogonalement par rapport à l'axe moteur A1, et sensiblement dans le plan de rotation du ventilateur. De ce fait, le collecteur 48 comporte pour l'essentiel une paroi arrière transversale 52 perpendiculaire à l'axe moteur A1, agencée en regard du ventilateur 40, à proximité de celui-ci, et du côté opposé du moteur électrique 30 par rapport au ventilateur 40, et une couronne 54 qui qui s'étend en arc de cercle autour de l'axe moteur A1 et autour du ventilateur 40, à l'exception d'une interruption qui appartient à la jonction entre le collecteur 48 et le conduit de transfert 50. La paroi arrière transversale 52 peut coïncider avec une paroi extérieure du boitier externe 18, par exemple la paroi inférieure 21 ou une face latérale 28. L'utilisation d'un ventilateur de type centrifuge permet notamment de réduire l'encombrement, selon la direction de l'axe moteur A1, de l'ensemble constitué par le moteur électrique 30, le ventilateur 40 et le collecteur 48, afin de ne pas avoir à augmenter la dimension de la base motorisée selon cette dimension. Cependant, on pourrait très bien avoir un ventilateur qui soit un ventilateur de type axial qui rejette le flux d'air sortant du ventilateur selon la direction axiale de l'axe moteur A1.

Le rôle, l'avantage et la disposition du conduit de transfert 50 seront détaillés plus loin.

Le circuit aval 44 comporte, entre le conduit de transfert 50 et l'orifice de sortie 46, une double cheminée 56 ayant un canal extérieur tubulaire amont 58, qui s'étend selon une direction de cheminée A2 depuis une extrémité amont 59 reliée au conduit de transfert 50, et qui est raccordé fluidiquement, par l'intermédiaire d'un volume de retournement 60, à un canal intérieur aval 62 qui s'étend à l'intérieur du canal extérieur tubulaire amont 58 selon la direction de cheminée A2 jusqu'à une extrémité aval qui correspond à l'orifice de sortie 46. La double cheminée 56 est reçue dans l'espace intérieur délimité par le boitier externe 18. Dans certains modes de réalisation, le canal extérieur tubulaire amont 58 et le canal intérieur aval 62 sont coaxiaux. De préférence, la section transversale du canal intérieur aval 62 est toujours supérieure à la section transversale du canal extérieur tubulaire amont 58, de sorte que l'écoulement de l'air se fait au travers d'une section continument croissante.

Une géométrie plus détaillée d'un premier exemple de réalisation d'une double cheminée 56 est visible dans les Figs. 3 à 5. Une géométrie plus détaillée d'un autre exemple de réalisation d'une double cheminée 56 est visible à la [Fig.10].

Dans tous les cas, par conception, le flux d'air sortant qui est généré par le ventilateur 40 parcourt la double cheminée 56 d'abord dans le canal extérieur tubulaire amont 58, selon un premier sens de la direction de cheminée A2, puis dans le canal intérieur aval 62, selon un second sens opposé au premier sens de la direction de cheminée 62. En d'autres termes, la double cheminée 56 forme une chicane dans le trajet qui est disponible pour le flux d'air sortant. Cet effet de chicane est particulièrement intéressant en ce qu'il impose un fort amortissement aux ondes sonores qui sont susceptibles de se propager dans l'air le long du circuit aval 44. Notamment, les ondes sonores qui sont générées par l'interaction du ventilateur 40 avec le flux d'air sortant sont amorties par l'effet de chicane dû à la présence de la double cheminée 56. La double cheminée 56 est agencée de telle sorte que l'extrémité amont 59 du canal extérieur tubulaire amont 58, par laquelle le flux d'air entre dans le double cheminée 56, ne peut pas se trouver en vis-à-vis de l'orifice de sortie 46, empêchant ainsi une propagation directe vers l'extérieur des ondes sonores propagées dans le flux d'air sortant.

En termes de construction, la double cheminée 56 comporte une cloison externe tubulaire 64 qui s'étend selon la direction de cheminée A2 et qui délimite radialement vers l'extérieur le canal extérieur tubulaire amont 58. La double cheminée 56 comporte aussi une cloison interne tubulaire 66 qui s'étend aussi selon la direction de cheminée A2, à l'intérieur du volume délimité par la cloison externe tubulaire 64, de sorte que les deux cloisons délimitent entre elles le canal extérieur tubulaire amont 58 tandis que la cloison interne tubulaire 66 délimite le canal intérieur aval 62. La cloison interne tubulaire 66 et la cloison externe tubulaire 64 présentent chacune une longueur selon la direction de cheminée A2, et la cloison interne tubulaire 66 est imbriquée sur toute ou partie de sa longueur à l'intérieur du volume délimité par la cloison interne tubulaire 66.

Avantageusement, on peut prévoir que le canal intérieur aval 62 présente une forme de révolution autour d'un axe qui forme la direction de cheminée A2. De même, on peut prévoir le canal extérieur tubulaire amont présente une forme de révolution autour d'un axe parallèle à la direction de cheminée A2, voire même de révolution autour de l'axe qui forme la direction de cheminée A2.

Ainsi, dans les exemples illustrés, l'une et l'autre de la cloison externe tubulaire 64 et de la cloison interne tubulaire 66 présentent une géométrie de révolution autour d'un axe ayant comme direction la direction de cheminée A2. Dans cet exemple, la cloison externe tubulaire 64 et la cloison interne tubulaire 66 présentent une géométrie de révolution autour d'un même axe A2. Cependant, on pourrait prévoir que la cloison externe tubulaire 64 et la cloison interne tubulaire 66 présentent une géométrie de révolution autour de deux axes non confondus, par exemple deux axes parallèles décalés transversalement l'un de l'autre. On peut prévoir que la cloison externe tubulaire 64 et la cloison interne tubulaire 66 présentent une géométrie de révolution autour de deux axes non strictement parallèles. De tels axes non parallèles formeront de préférence entre eux un angle faible, de préférence inférieur à 15 degrés d'angle.

De préférence, comme illustré dans les différents exemples, la cloison externe tubulaire 64 et la cloison interne tubulaire 66 sont entièrement disjointes l'une de l'autre. Cela permet notamment de les isoler l'une de l'autre en termes de vibrations, ce qui peut contribuer à une réduction du bruit transmis à l'extérieur par la base motorisée. Cependant, dans le cas où la cloison externe tubulaire 64 et la cloison interne tubulaire 66 présentent une géométrie allongée autour de deux axes non confondus, on peut prévoir que les deux cloisons soient tangentes l'une à l'autre sur toute ou partie de leur longueur (pour des géométries courbes en section), ou présentent une face commune (pour des géométries prismatiques en section).

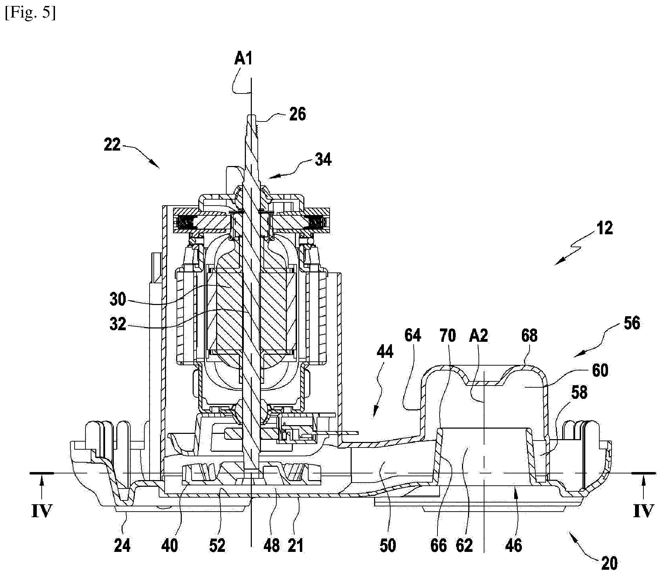

Dans certains exemples illustrés, tels que ceux du deuxième, troisième ou quatrième mode de réalisation, l'une et/ou l'autre de la cloison externe tubulaire 64 et de la cloison interne tubulaire 66 peut présenter une forme cylindrique formée par la surface générée par une droite suivant un contour fermé en restant parallèle à elle-même. Cependant, l'une et/ou l'autre de la cloison externe tubulaire 64 et de la cloison interne tubulaire 66 peut présenter une forme tronconique. Ainsi, dans les exemples de la [Fig.5] et de la [Fig.10], la cloison externe tubulaire 64 est sensiblement cylindrique tandis que la cloison interne tubulaire 66 présente une forme tronconique évasée vers l'aval, tant sur sa face interne que sur sa face externe.

Dans l'exemple illustré sur les Figs. 3 à 5 et dans celui de la [Fig.10], le volume de retournement 60 est délimité par une paroi d'extrémité 68 de la double cheminée 56 qui est raccordée sur toute une circonférence d'une extrémité aval de la cloison externe tubulaire 64 de la double cheminée 56. Ainsi, la cloison externe tubulaire 64 délimite un volume qui est bouché selon la direction de cheminée A2 à son extrémité opposée à son extrémité amont. Par ailleurs, la cloison interne tubulaire 66, qui est reçue sur au moins une partie de sa longueur dans ce volume, présente un bord libre amont 70 qui est agencé à distance de la paroi d'extrémité 68 de la double cheminée 56 pour former le volume de retournement, ceci afin de ménager un passage pour le flux d'air sortant entre le canal extérieur tubulaire amont 58 et le canal intérieur aval 62, ce passage correspondant au volume de retournement 60.

Dans l'exemple illustré sur les Figs. 3 à 5 et dans celui de la [Fig.10], la paroi d'extrémité 68 de la double cheminée 56 présente une face interne concave et présente une forme de section de tore ayant un axe parallèle à la direction de cheminée A2, voire même, dans l'exemple, confondu avec l'axe de symétrie de révolution de la double cheminée 56, la section de tore étant coupée par un plan perpendiculaire à l'axe du tore. Cette géométrie est favorable pour le retournement du flux d'air sortant dont la direction générale d'écoulement fait un retournement à 180° entre le canal extérieur tubulaire amont 58 et le canal intérieur aval 62.

Comme on peut le voir plus particulièrement pour le premier exemple illustré sur les Figs. 3 à 5 et pour celui de la [Fig.10], le canal intérieur aval 62 peut présenter une section transversale croissante en allant vers son extrémité aval selon la direction de cheminée A2. Cela est particulière intéressant dans la mesure où cela permet de ralentir la vitesse d'écoulement du flux d'air sortant au niveau de l'orifice de sortie 46, ce qui réduit le niveau de bruit aéraulique dû à l'écoulement du flux d'air sortant. Cela peut être notamment obtenu avec une cloison interne tubulaire 66 tronconique, ou en tous cas évasée. De même, on peut prévoir que le canal extérieur tubulaire amont 58 présente une section transversale croissante en allant selon la direction de cheminée depuis son extrémité amont vers le volume de retournement, comme dans le premier exemple illustré sur les Figs. 3 à 5, ce qui favorise ici aussi la réduction du niveau de bruit aéraulique. En effet, dans ce dernier exemple, le caractère tronconique de la face externe de la cloison interne tubulaire 66 permet d'obtenir une section transversale croissante pour le canal extérieur tubulaire amont 58, ceci en dépit du caractère cylindrique de la face interne de la cloison externe tubulaire 64.

Une réduction du niveau de bruit aéraulique dû à l'écoulement du flux d'air sortant peut aussi être obtenue avantageusement en prévoyant, comme cela est visible dans l'exemple illustré sur la [Fig.10], que l'extrémité aval du canal intérieur aval 62 qui correspond à l'orifice de sortie 46 présente une géométrie évasée en pavillon d'instrument de musique, par exemple en pavillon de trompette. Cette géométrie diminue encore la vitesse d'écoulement du flux d'air sortant et permet de limiter les turbulences.

Dans les exemples illustrés, on remarque que la direction de cheminée de la double cheminée 56 peut être représentée sous la forme d'une droite A2. Cependant, on pourrait prévoir que la direction de cheminée soit légèrement courbe, tout en conservant le principe d'avoir un canal extérieur tubulaire amont, et un canal intérieur aval qui s'étend à l'intérieur du volume du canal extérieur tubulaire amont selon la direction de cheminée A2 jusqu'à une extrémité aval qui correspond à l'orifice de sortie 46.

Dans les exemples illustrés, on remarque que la direction de cheminée A2 de la double cheminée 56 est perpendiculaire à la face latérale 28 ou à la face inférieure 21 du boîtier externe 18 dans laquelle est formé l'orifice de sortie 46. Cependant, on pourrait prévoir que la direction de cheminée A2 de la double cheminée 56 forme un angle inférieur à 90°par rapport à la face latérale 28 ou à la face inférieure 21 du boîtier externe 18 dans laquelle est formé l'orifice de sortie 46. En d'autres termes, le canal intérieur aval 62 peut être oblique par rapport à la face latérale 28 ou à la face inférieure 21 du boîtier externe 18 dans laquelle est formé l'orifice de sortie 46, par exemple en formant un angle compris entre 30 degrés d'angle et 80 degrés d'angle, par rapport à la face latérale 28 ou à la face inférieure 21 du boîtier externe 18 dans laquelle est formé l'orifice de sortie 46.

Dans le premier exemple illustré sur les Figs. 3 à 5, la direction de cheminée A2 est parallèle à l'axe moteur A1, et est décalée transversalement par rapport à l'axe moteur A1. On retrouve la même configuration pour le troisième et le cinquième mode de réalisation. Comme on le détaillera plus loin, le décalage transversal est notamment permis par la présence du conduit de transfert 50. Plus précisément, dans ces exemples, on remarque que la double cheminée 56 s'étend au moins en partie à hauteur du moteur électrique 30 selon la direction de l'axe moteur A1, et en parallèle de celui-ci dans le boitier externe 18. Cette disposition, dans laquelle la double cheminée 56 est décalée transversalement mais au moins en partie en parallèle à côté du moteur électrique 30 permet de réduire la dimension, selon la direction de l'axe moteur A1, de l'ensemble constitué par le moteur électrique 30 et la double cheminée 56.

En variante, dans certains modes de réalisation, tels que les deuxième et quatrième exemples de réalisation de la Fig. 6A-6C et de la Fig. 8A-8C, la direction de cheminée A2 s'étend perpendiculairement à l'axe moteur A1.

Ainsi, on comprend que, quelle que soit l'orientation verticale ou horizontale de l'axe moteur A1, on peut orienter l'axe de cheminée horizontalement, pour avoir un orifice de sortie 46 dans une face latérale 28 du boîtier externe 18 (ce qui peut être favorable à une limitation de la résistance à la circulation du flux d'air sortant, donc favorable à l'efficacité de la ventilation), ou dans la face inférieure 21 du boîtier externe 18 (ce qui peut être favorable à une atténuation du bruit, et à une limitation du risque d'entrée non souhaité de matière dans le circuit aval 44 par l'orifice de sortie 46). Ainsi, dans les premier, quatrième et cinquième modes de réalisation, la direction de cheminée A2 est verticale et l'orifice de sortie est aménagé dans une face inférieure du boîtier externe 18, tandis que dans les deuxième et troisième modes de réalisation, la direction de cheminée A2 est horizontale et l'orifice de sortie 46 est aménagé dans une face latérale 28 du boîtier externe 18.

Dans tous les cas, le conduit de transfert 50 s'étend entre le ventilateur 40 et le canal extérieur tubulaire amont 58. Bien entendu, dans le cas d'une construction particulièrement compacte, la longueur du conduit de transfert 50 peut être courte, voire peut se présenter sous la forme d'une simple fenêtre de transfert entre le collecteur 48 et le canal extérieur tubulaire amont 58. Lorsque le ventilateur 40 est un ventilateur centrifuge, le conduit de transfert s'étend de préférence selon une direction perpendiculaire à l'axe moteur A1. On remarque que, dans ce cas, le conduit de transfert peut avantageusement présenter une paroi latérale qui prolonge la paroi arrière transversale 52 du collecteur 48, ceci pour limiter la génération de turbulences aérodynamiques, ce qui est favorable à une augmentation de l'efficacité de ventilation et à une réduction des bruits aérauliques. Dans le cas d'un ventilateur axial, on prévoira avantageusement que la géométrie du collecteur dévie vers le conduit de transfert 50 le flux d'air sortant du ventilateur, qui est donc refoulé par le ventilateur selon la direction axiale du ventilateur.

De préférence, le conduit de transfert 50 présente une section transversale croissante en allant du collecteur 48 vers l'extrémité amont du canal extérieur tubulaire amont 58, ceci afin de réduire le niveau de turbulence du flux d'air sortant.

De préférence, le circuit aval 44 présente une section transversale croissante dans le sens de circulation du flux d'air sortant depuis l'entrée du conduit de transfert 50 jusqu'à l'orifice de sortie 46.

De préférence, la direction de cheminée A2 s'étend selon une direction perpendiculaire à une direction principale du conduit de transfert. Plus précisément, on pourra avantageusement prévoir que le conduit de transfert 50 guide le flux d'air sortant de telle sorte qu'il est injecté dans le canal extérieur tubulaire amont 58 de la double cheminée 56 selon une direction tangentielle par rapport à la direction de cheminée. Avec une telle configuration, on facilite l'écoulement du flux d'air sortant au niveau de l'extrémité amont du canal extérieur tubulaire amont 58, donc lors du passage du conduit de transfert 50 à la double cheminée 56. Cette configuration favorise notamment un écoulement de nature hélicoïdale du flux d'air sortant, au moins dans une partie amont du canal extérieur tubulaire amont 58, là encore au bénéfice d'une moindre déperdition d'énergie aérauliques, ce qui favorise l'efficacité de la ventilation.

## Revendications

1. Base motorisée (12) pour un appareil (10) de préparation culinaire, ladite base motorisée (12) comportant :
- un boitier externe (18) ayant, sur un côté supérieur (22), un coupleur (26) configuré pour permettre un accouplement et un désaccouplement d'un outil de travail (16) et pour assurer l'entraînement en rotation de l'outil de travail (16), le boîtier externe (18) comportant, sur un côté inférieur (20), un piètement d'appui (24) par lequel la base motorisée (12) est destinée à reposer sur une surface d'accueil (S),
- dans le boîtier externe (18), un moteur électrique (30) ayant un arbre moteur (32) rotatif autour d'un axe moteur (A1), le moteur électrique (30) ayant une première extrémité axiale (34) et une deuxième extrémité axiale (36), opposée à la première extrémité axiale (34), qui entraîne en rotation un ventilateur (40) qui est agencé du côté de la deuxième extrémité axiale (36) du moteur et qui aspire un flux d'air qui circule le long du moteur électrique (30) depuis la première extrémité axiale (34) vers la deuxième extrémité axiale (36), le ventilateur (40) rejetant un flux d'air sortant qui est canalisé selon un circuit aval (44) vers un orifice de sortie (46) aménagé dans une face du boitier externe (18), au niveau duquel le flux d'air sortant est éjecté en dehors du boîtier externe (18), le circuit aval (44) comprenant, successivement dans le sens de circulation du flux d'air sortant, un collecteur (48), un conduit de transfert (50), et l'orifice de sortie (46),
**caractérisée en ce que** le circuit aval (44) comporte, entre le conduit de transfert (50) et l'orifice de sortie (46), une double cheminée (56) ayant un canal extérieur tubulaire amont (58), qui s'étend selon une direction de cheminée (A2) depuis une extrémité amont (59) reliée au conduit de transfert (50), et qui est raccordé fluidiquement, par l'intermédiaire d'un volume de retournement (60), à un canal intérieur aval (62) qui s'étend à l'intérieur du volume du canal extérieur tubulaire amont (58) selon la direction de cheminée (A2) jusqu'à une extrémité aval qui correspond à l'orifice de sortie (46).

2. Base motorisée (12) selon la revendication 1, **caractérisée en ce que** le flux d'air sortant parcourt la double cheminée (56) d'abord dans le canal extérieur tubulaire amont (58), selon un premier sens de la direction de cheminée (A2), puis dans le canal intérieur aval (62), selon un second sens opposé au premier sens de la direction de cheminée (A2).

3. Base motorisée (12) selon l'une des revendications 1 ou 2, **caractérisée en ce que** la double cheminée (56) comporte une cloison externe tubulaire (64) qui s'étend selon la direction de cheminée (A2) et une cloison interne tubulaire (66) qui s'étend selon la direction de cheminée (A2) à l'intérieur du volume délimité par la cloison externe tubulaire (64) de sorte que la cloison externe tubulaire (64) et la cloison interne tubulaire (66) délimitent entre elles le canal extérieur tubulaire amont (58) tandis que la cloison interne tubulaire (66) délimite le canal intérieur aval (62).

4. Base motorisée (12) selon l'une des revendications 1 à 3, **caractérisée en ce que** le conduit de transfert (50) présente une section transversale croissante en allant du collecteur (48) vers l'extrémité amont (59) du canal extérieur tubulaire amont (58).

5. Base motorisée (12) selon l'une des revendications 1 à 4, **caractérisée en ce que** le ventilateur (40) est un ventilateur centrifuge qui rejette le flux d'air sortant du ventilateur selon une direction orthogonale à l'axe moteur (A1) et **en ce que** le conduit de transfert (50) est orienté orthogonalement par rapport à l'axe moteur (A1).

6. Base motorisée (12) selon l'une des revendications 1 à 4, **caractérisée en ce que** le ventilateur (40) est un ventilateur axial qui rejette le flux d'air sortant du ventilateur selon la direction axiale de l'axe moteur (A1).

7. Base motorisée (12) selon la revendication 6, **caractérisée en ce que** le conduit de transfert (50) est orienté orthogonalement par rapport à l'axe moteur (A1), et **en ce que** le collecteur (48) dévie le flux d'air sortant du ventilateur (40) selon la direction axiale de l'axe moteur (A1) vers le conduit de transfert (50).

8. Base motorisée (12) selon l'une des revendications 1 à 7, **caractérisée en ce que** la direction de cheminée (A2) s'étend selon une direction perpendiculaire à une direction principale du conduit de transfert (50).

9. Base motorisée (12) selon l'une des revendications 1 à 8, **caractérisée en ce que** le conduit de transfert (50) guide le flux d'air sortant de telle sorte qu'il est injecté dans le canal extérieur tubulaire amont (58) de la double cheminée (56) selon une direction tangentielle par rapport à la direction de cheminée (A2).

10. Base motorisée (12) selon l'une des revendications 1 à 9, **caractérisée en ce que** la direction de cheminée (A2) est parallèle à l'axe moteur (A1), et est décalée transversalement par rapport à l'axe moteur (A1).

11. Base motorisée (12) selon l'une des revendications 1 à 9, **caractérisée en ce que** la direction de cheminée (A2) s'étend perpendiculairement à l'axe moteur (A1).

12. Base motorisée (12) selon l'une des revendications 1, 2, 4 à 11 prise en combinaison avec la revendication 3, **caractérisée en ce que** le volume de retournement (60) est délimité par une paroi d'extrémité (68) de la double cheminée (56) qui est raccordée sur toute une circonférence d'une extrémité aval de la cloison externe tubulaire (64) de la double cheminée (56), et **en ce qu'**un bord libre amont (70) de la cloison interne tubulaire (66) est agencé à distance de la paroi d'extrémité (68) de la double cheminée (56) pour former le volume de retournement (60).

13. Base motorisée (12) selon la revendication 12, **caractérisée en ce que** la paroi d'extrémité (68) de la double cheminée (56) présente une face interne concave et présente une forme de section de tore ayant un axe parallèle à la direction de cheminée (A2), la section de tore étant coupée par un plan perpendiculaire à l'axe du tore.

14. Base motorisée (12) selon l'une des revendications 1 à 13, **caractérisée en ce que** le canal intérieur aval (62) présente une section transversale croissante en allant vers son extrémité aval selon la direction de cheminée (A2).

15. Base motorisée (12) selon l'une des revendications 1 à 14, **caractérisée en ce que** l'extrémité aval du canal intérieur aval (62) qui correspond à l'orifice de sortie (46) présente une géométrie évasée en pavillon d'instrument de musique.

16. Base motorisée (12) selon l'une des revendications 1 à 15, **caractérisée en ce que** le canal extérieur tubulaire amont (58) présente une section transversale croissante en allant depuis son extrémité amont (59) vers le volume de retournement selon la direction de cheminée (A2).

17. Base motorisée (12) selon l'une des revendications 1 à 16, **caractérisée en ce que** la section transversale du canal intérieur aval (62) est toujours supérieure à la section transversale du canal extérieur tubulaire amont (58).

18. Base motorisée (12) selon l'une des revendications 1 à 17, **caractérisée en ce que** la direction de cheminée (A2) est verticale et **en ce que** l'orifice de sortie (46) est aménagé dans une face inférieure (21) du boîtier externe (18).

19. Base motorisée (12) selon l'une des revendications 1 à 18, **caractérisée en ce que** la première extrémité axiale (34) du moteur électrique (30) est reliée au coupleur (26) pour en assurer l'entraînement en rotation.

20. Appareil (10) de préparation culinaire comportant une base motorisée (12) et un accessoire de travail (14) agencé sur la base motorisée (12), l'accessoire de travail (14) comprenant un récipient de travail (15) et un outil de travail (16) agencé dans le récipient de travail (15) et entrainé en rotation par la base motorisée (12), **caractérisé en ce que** la base motorisée est conforme à l'une des revendications 1 à 19.

## Patentansprüche

1. Motorisierte Basis (12) für ein Gerät (10) zur Nahrungsmittelzubereitung, wobei die motorisierte Basis (12) umfasst:
- ein Außengehäuse (18), das an einer oberen Seite (22) eine Kupplung (26) aufweist, die konfiguriert ist, um ein Einkuppeln und ein Auskuppeln eines Arbeitswerkzeugs (16) zu ermöglichen und um den Drehantrieb des Arbeitswerkzeugs (16) zu gewährleisten, wobei das Außengehäuse (18) an einer unteren Seite (20) einen Auflagefuß (24) aufweist, mit dem die motorisierte Basis (12) auf einer Aufnahmefläche (S) ruhen soll,
- in dem Außengehäuse (18) einen Elektromotor (30), der eine Motorwelle (32) aufweist, die um eine Motorachse (A1) drehbar ist, wobei der Elektromotor (30) ein erstes axiales Ende (34) und ein zweites axiales Ende (36), das dem ersten axialen Ende (34) gegenüberliegt, aufweist, der einen Lüfter (40) in Drehung antreibt, der auf der Seite des zweiten axialen Endes (36) des Motors angeordnet ist und der einen Luftstrom ansaugt, der entlang des Elektromotors (30) von dem ersten axialen Ende (34) zu dem zweiten axialen Ende (36) strömt, wobei der Lüfter (40) einen austretenden Luftstrom ausstößt, der entlang eines stromabwärtigen Kreislaufs (44) zu einer Austrittsöffnung (46) kanalisiert wird, die auf einer Seite des Außengehäuses (18) eingerichtet ist, auf deren Höhe der austretende Luftstrom aus dem Außengehäuse (18) heraus ausgestoßen wird, wobei der stromabwärtige Kreislauf (44) nacheinander in der Zirkulationsrichtung des austretenden Luftstroms einen Kollektor (48), eine Übertragungsleitung (50) und die Austrittsöffnung (46) umfasst,
**dadurch gekennzeichnet, dass** der stromabwärtige Kreislauf (44) zwischen der Übertragungsleitung (50) und der Austrittsöffnung (46) einen Doppelschacht (56) aufweist, der einen stromaufwärtigen rohrförmigen äußeren Kanal (58) hat, der sich in einer Schachtrichtung (A2) von einem stromaufwärtigen Ende (59) aus erstreckt, das mit der Übertragungsleitung (50) verbunden ist, und der mittels eines Umkehrvolumens (60) mit einem stromabwärtigen inneren Kanal (62) fluidisch verbunden ist, der sich innerhalb des Volumens des stromaufwärtigen rohrförmigen äußeren Kanals (58) in der Schachtrichtung (A2) bis zu einem stromabwärtigen Ende erstreckt, das der Austrittsöffnung (46) entspricht.

2. Motorisierte Basis (12) nach Anspruch 1, **dadurch gekennzeichnet, dass** der austretende Luftstrom durch den Doppelschacht (56) zuerst in dem stromaufwärtigen rohrförmigen äußeren Kanal (58) in einer ersten Richtung der Schachtrichtung (A2) und dann in dem stromabwärtigen inneren Kanal (62) in einer zweiten Richtung, die der ersten Richtung der Schachtrichtung (A2) entgegengesetzt ist, verläuft.

3. Motorisierte Basis (12) nach einem der Ansprüche 1 oder 2, **dadurch gekennzeichnet, dass** der Doppelschacht (56) eine rohrförmige äußere Trennwand (64), die sich in der Schachtrichtung (A2) erstreckt, und eine rohrförmige innere Trennwand (66), die sich in der Schachtrichtung (A2) erstreckt, innerhalb des Volumens aufweist, das durch die rohrförmige äußere Trennwand (64) derart begrenzt ist, dass die rohrförmige äußere Trennwand (64) und die rohrförmige innere Trennwand (66) zwischen sich den stromaufwärtigen rohrförmigen äußeren Kanal (58) begrenzen, während die rohrförmige innere Trennwand (66) den stromabwärtigen rohrförmigen inneren Kanal (62) begrenzt.

4. Motorisierte Basis (12) nach einem der Ansprüche 1 bis 3, **dadurch gekennzeichnet, dass** die Übertragungsleitung (50) vom Kollektor (48) zum stromaufwärtigen Ende (59) des stromaufwärtigen rohrförmigen äußeren Kanals (58) hin einen zunehmenden Querschnitt aufweist.

5. Motorisierte Basis (12) nach einem der Ansprüche 1 bis 4, **dadurch gekennzeichnet, dass** der Lüfter (40) ein Zentrifugallüfter ist, der den aus dem Lüfter austretenden Luftstrom in einer Richtung orthogonal zur Motorachse (A1) ableitet, und dass die Übertragungsleitung (50) orthogonal in Bezug auf die Motorachse (A1) ausgerichtet ist.

6. Motorisierte Basis (12) nach einem der Ansprüche 1 bis 4, **dadurch gekennzeichnet, dass** der Lüfter (40) ein Axiallüfter ist, der den aus dem Lüfter austretenden Luftstrom in axialer Richtung der Motorachse (A1) ableitet.

7. Motorisierte Basis (12) nach Anspruch 6, **dadurch gekennzeichnet, dass** die Übertragungsleitung (50) orthogonal zur Motorachse (A1) ausgerichtet ist, und dass der Kollektor (48) den vom Lüfter (40) austretenden Luftstrom in axialer Richtung der Motorachse (A1) in die Übertragungsleitung (50) umlenkt.

8. Motorisierte Basis (12) nach einem der Ansprüche 1 bis 7, **dadurch gekennzeichnet, dass** die Schachtrichtung (A2) sich in einer Richtung senkrecht zu einer Hauptrichtung der Übertragungsleitung (50) erstreckt.

9. Motorisierte Basis (12) nach einem der Ansprüche 1 bis 8, **dadurch gekennzeichnet, dass** die Übertragungsleitung (50) den austretenden Luftstrom derart führt, dass er in den stromaufwärtigen rohrförmigen äußeren Kanal (58) des Doppelschachts (56) in einer tangentialen Richtung in Bezug auf die Schachtrichtung (A2) eingespeist wird.

10. Motorisierte Basis (12) nach einem der Ansprüche 1 bis 9, **dadurch gekennzeichnet, dass** die Schachtrichtung (A2) parallel zu der Motorachse (A1) verläuft und quer in Bezug auf die Motorachse (A1) versetzt ist.

11. Motorisierte Basis (12) nach einem der Ansprüche 1 bis 9, **dadurch gekennzeichnet, dass** sich die Schachtrichtung (A2) senkrecht zur Motorachse (A1) erstreckt.

12. Motorisierte Basis (12) nach einem der Ansprüche 1, 2, 4 bis 11 in Kombination mit Anspruch 3, **dadurch gekennzeichnet, dass** das Umkehrvolumen (60) durch eine Endwand (68) des Doppelschachts (56) begrenzt ist, die über einen gesamten Umfang eines stromabwärtigen Endes der rohrförmigen äußeren Trennwand (64) des Doppelschachts (56) verbunden ist, und dass ein stromaufwärtiger freier Rand (70) der rohrförmigen inneren Trennwand (66) von der Endwand (68) des Doppelschachts (56) beabstandet angeordnet ist, um das Umkehrvolumen (60) zu bilden.

13. Motorisierte Basis (12) nach Anspruch 12, **dadurch gekennzeichnet, dass** die Endwand (68) des Doppelschachts (56) eine konkave innere Seite aufweist und eine Torusquerschnittsform mit einer Achse parallel zur Schachtrichtung (A2) aufweist, wobei der Torusquerschnitt von einer Ebene geschnitten wird, die senkrecht zur Torusachse verläuft.

14. Motorisierte Basis (12) nach einem der Ansprüche 1 bis 13, **dadurch gekennzeichnet, dass** der stromabwärtige innere Kanal (62) einen Querschnitt aufweist, der zu seinem stromabwärtigen Ende hin in der Schachtrichtung (A2) zunimmt.

15. Motorisierte Basis (12) nach einem der Ansprüche 1 bis 14, **dadurch gekennzeichnet, dass** das stromabwärtige Ende des stromabwärtigen inneren Kanals (62), das der Austrittsöffnung (46) entspricht, eine aufgeweitete Geometrie in Form eines Musikinstrumenten-Schalltrichters aufweist.

16. Motorisierte Basis (12) nach einem der Ansprüche 1 bis 15, **dadurch gekennzeichnet, dass** der stromaufwärtige rohrförmige äußere Kanal (58) einen sich von seinem stromaufwärtigen Ende (59) zum Umkehrvolumen hin in Schachtrichtung (A2) zunehmenden Querschnitt aufweist.

17. Motorisierte Basis (12) nach einem der Ansprüche 1 bis 16, **dadurch gekennzeichnet, dass** der Querschnitt des stromabwärtigen inneren Kanals (62) stets größer ist als der Querschnitt des stromaufwärtigen rohrförmigen äußeren Kanals (58).

18. Motorisierte Basis (12) nach einem der Ansprüche 1 bis 17, **dadurch gekennzeichnet, dass** die Schachtrichtung (A2) vertikal ist und dass die Austrittsöffnung (46) in einer unteren Seite (21) des Außengehäuses (18) eingerichtet ist.

19. Motorisierte Basis (12) nach einem der Ansprüche 1 bis 18, **dadurch gekennzeichnet, dass** das erste axiale Ende (34) des Elektromotors (30) mit der Kupplung (26) verbunden ist, um deren Drehantrieb zu gewährleisten.

20. Gerät (10) zur Nahrungsmittelzubereitung, das eine motorisierte Basis (12) und ein auf der motorisierten Basis (12) angeordnetes Arbeitszubehörteil (14) aufweist, wobei das Arbeitszubehörteil (14) einen Arbeitsbehälter (15) und ein in dem Arbeitsbehälter (15) angeordnetes und von der motorisierten Basis (12) drehbar angetriebenes Arbeitswerkzeug (16) umfasst, **dadurch gekennzeichnet, dass** die motorisierte Basis einem der Ansprüche 1 bis 19 entspricht.

## Claims

1. Motorised base (12) for a food preparation appliance (10), said motorised base (12) comprising:
- an outer casing (18) having, on an upper side (22), a coupler (26) configured to enable a coupling and an uncoupling of a work tool (16) and to ensure the rotation of the work tool (16), the outer housing (18) comprising, on a lower side (20), a support underframe (24) by which the motorised base (12) is intended to rest on an accommodating surface (S),
- in the outer housing (18), an electric motor (30) having a motor shaft (32) rotating about a motor axis (A1), the electric motor (30) having a first axial end (34) and a second axial end (36), opposite the first axial end (34), which rotates a fan (40) which is arranged on the side of the second axial end (36) of the motor and which suctions a flow of air which circulates along the electric motor (30) from the first axial end (34) to the second axial end (36), the fan (40) discharging an outgoing flow of air which is channeled along a downstream circuit (44) to an outlet opening (46) arranged in a face of the outer casing (18), at the level of which the outgoing flow of air is ejected outside of the outer housing (18), the downstream circuit (44) comprising, successively in the direction of circulation of the outgoing flow of air, a collector (48), a transfer duct (50), and the outlet opening (46),
**characterised in that** the downstream circuit (44) comprises, between the transfer duct (50) and the outlet opening (46), a double vent (56) having an upstream tubular outer channel (58), which extends in a venting direction (A2) from an upstream end (59) connected to the transfer duct (50), and which is fluidically connected, via a turnaround volume (60), to a downstream inner channel (62) which extends inside of the volume of the upstream tubular outer channel (58) in the venting direction (A2) as far as a downstream end which corresponds to the outlet opening (46).

2. Motorised base (12) according to claim 1, **characterised in that** the outgoing flow of air crosses the double vent (56) first in the upstream tubular outer channel (58), in a first direction of the venting direction (A2), then in the downstream inner channel (62), in a second direction opposite the first direction of the venting direction (A2).

3. Motorised base (12) according to any one of claims 1 or 2, **characterised in that** the double vent (56) comprises a tubular outer partition (64) which extends in the venting direction (A2) and a tubular inner partition (66) which extends in the venting direction (A2) inside the volume delimited by the tubular outer partition (64), such that the tubular outer partition (64) and the tubular inner partition (66) delimit, between them, the upstream tubular outer channel (58) while the tubular inner partition (66) delimits the downstream inner channel (62).

4. Motorised base (12) according to any one of claims 1 to 3, **characterised in that** the transfer duct (50) has an increasing transverse cross-section by going from the collector (48) to the upstream end (59) of the upstream tubular outer channel (58).

5. Motorised base (12) according to any one of claims 1 to 4, **characterised in that** the fan (40) is a centrifugal fan which discharges the outgoing flow of air of the fan in a direction orthogonal to the motor axis (A1) and **in that** the transfer duct (50) is oriented orthogonally with respect to the motor axis (A1).

6. Motorised base (12) according to any one of claims 1 to 4, **characterised in that** the fan (40) is an axial fan which discharges the outgoing flow of air of the fan in the axial direction of the motor axis (A1).

7. Motorised base (12) according to claim 6, **characterised in that** the transfer duct (50) is oriented orthogonally with respect to the motor axis (A1), and **in that** the collector (48) diverts the outgoing flow of air from the fan (40) in the axial direction of the motor axis (A1) to the transfer duct (50).

8. Motorised base (12) according to any one of claims 1 to 7, **characterised in that** the venting direction (A2) extends in a direction perpendicular to a main direction of the transfer duct (50).

9. Motorised base (12) according to any one of claims 1 to 8, **characterised in that** the transfer duct (50) guides the outgoing flow of air such that it is injected into the upstream tubular outer channel (58) of the double vent (56) in a tangential direction with respect to the venting direction (A2).

10. Motorised base (12) according to any one of claims 1 to 9, **characterised in that** the venting direction (A2) is parallel to the motor axis (A1), and is transversally offset with respect to the motor axis (A1).

11. Motorised base (12) according to any one of claims 1 to 9, **characterised in that** the venting direction (A2) extends perpendicularly to the motor axis (A1).

12. Motorised base (12) according to any one of claims 1, 2, 4 to 11 combined with claim 3, **characterised in that** the turnaround volume (60) is delimited by an end wall (68) of the double vent (56) which is connected over an entire circumference of a downstream end of the tubular outer partition (64) of the double vent (56), and **in that** an upstream free edge (70) of the tubular inner partition (66) is arranged at a distance from the end wall (68) of the double vent (56) to form the turnaround volume (60).

13. Motorised base (12) according to claim 12, **characterised in that** the end wall (68) of the double vent (56) has a concave inner face and has a toroidal cross-sectional shape having an axis parallel to the venting direction (A2), the toroidal cross-section being cut by a plane perpendicular to the toroidal axis.

14. Motorised base (12) according to any one of claims 1 to 13, **characterised in that** the downstream inner channel (62) has an increasing transverse cross-section by going to its downstream end in the venting direction (A2).

15. Motorised base (12) according to any one of claims 1 to 14, **characterised in that** the downstream end of the downstream inner channel (62) which corresponds to the outlet opening (46) has a bell-shaped flared geometry.

16. Motorised base (12) according to any one of claims 1 to 15, **characterised in that** the upstream tubular outer channel (62) has an increasing transverse cross-section by going from its upstream end (59) to the turnaround volume in the venting direction (A2).

17. Motorised base (12) according to any one of claims 1 to 16, **characterised in that** the transverse cross-section of the downstream inner channel (62) is always greater than the transverse cross-section of the upstream tubular outer channel (58).

18. Motorised base (12) according to any one of claims 1 to 17, **characterised in that** the venting direction (A2) is vertical and **in that** the outlet opening (46) is arranged in a lower face (21) of the outer housing (18).

19. Motorised base (12) according to any one of claims 1 to 18, **characterised in that** the first axial end (34) of the electric motor (30) is connected to the coupler (26) to ensure its rotation.

20. Food preparation appliance (10) comprising a motorised base (12) and a work accessory (14) arranged on the motorised base (12), the work accessory (14) comprising a work container (15) and a work tool (16) arranged in the work container (15) and rotated by the motorised base (12), **characterised in that** the motorised base is according to any one of claims 1 to 19.
